# EUROPEAN PATENT SPECIFICATION

(11) **EP 1 336 215 B1**
(45) Date of publication and mention of the grant of the patent: **30.11.2005**
(21) Application number: 01982941.5
(22) Date of filing: 23.10.2001
(51) Int. Cl.: H01M 8/12

(54) **ANODE ASSEMBLY FOR AN ELECTROCHEMICAL CELL**
ANODENZUSAMMENSTELLUNG FÜR EINE ELEKTROCHEMISCHE ZELLE
ENSEMBLE ANODE POUR UNE CELLULE ELECTROCHIMIQUE

(30) Priority: 23.10.2000 NL 1016458
(43) Date of publication of application: 20.08.2003
(73) Proprietor: Stichting Energieonderzoek Centrum Nederland, 1755 ZG Petten (NL)
(72) Inventor: OUWELTJES, Jan, Pieter, NL-1834 EZ St Pancras (NL)
(74) Representative: Jorritsma, Ruurd
(86) International application number: PCT/NL2001/000773
(87) International publication number: WO 2002/035634

(56) References cited:
- DE-A- 19 626 342
- DE-C- 19 630 843
- US-A- 5 753 385
- PATENT ABSTRACTS OF JAPAN vol. 1997, no. 11, 28 November 1997 (1997-11-28) -& JP 09 190824 A (KYUSHU ELECTRIC POWER CO INC;TOTO LTD), 22 July 1997 (1997-07-22) cited in the application -& DATABASE WPI Derwent Publications Ltd., London, GB; AN 1997-422363 XP002170104
- PATENT ABSTRACTS OF JAPAN vol. 1999, no. 13, 30 November 1999 (1999-11-30) -& JP 11 224673 A (KYOCERA CORP), 17 August 1999 (1999-08-17)
- PATENT ABSTRACTS OF JAPAN vol. 1996, no. 06, 28 June 1996 (1996-06-28) -& JP 08 031446 A (MITSUBISHI HEAVY IND LTD), 2 February 1996 (1996-02-02)
- PATENT ABSTRACTS OF JAPAN vol. 017, no. 578 (E-1450), 20 October 1993 (1993-10-20) -& JP 05 174832 A (MITSUI ENG & SHIPBUILD CO LTD), 13 July 1993 (1993-07-13)
- PATENT ABSTRACTS OF JAPAN vol. 1996, no. 12, 26 December 1996 (1996-12-26) -& JP 08 213029 A (FUJIKURA LTD), 20 August 1996 (1996-08-20)
- PATENT ABSTRACTS OF JAPAN vol. 1996, no. 03, 29 March 1996 (1996-03-29) -& JP 07 296838 A (KYOCERA CORP), 10 November 1995 (1995-11-10)
- PATENT ABSTRACTS OF JAPAN vol. 1997, no. 02, 28 February 1997 (1997-02-28) -& JP 08 273676 A (FUJIKURA LTD), 18 October 1996 (1996-10-18)
- PATENT ABSTRACTS OF JAPAN vol. 017, no. 480 (E-1425), 31 August 1993 (1993-08-31) -& JP 05 121084 A (NIPPON TELEGR & TELEPH CORP), 18 May 1993 (1993-05-18)
- PATENT ABSTRACTS OF JAPAN vol. 015, no. 277 (E-1089), 15 July 1991 (1991-07-15) -& JP 03 095859 A (FUJIKURA LTD), 22 April 1991 (1991-04-22)
- PATENT ABSTRACTS OF JAPAN vol. 015, no. 454 (E-1135), 19 November 1991 (1991-11-19) -& JP 03 194860 A (MITSUBISHI HEAVY IND LTD), 26 August 1991 (1991-08-26)
- PATENT ABSTRACTS OF JAPAN vol. 015, no. 277 (E-1089), 15 July 1991 (1991-07-15) -& JP 03 095860 A (FUJIKURA LTD), 22 April 1991 (1991-04-22)
- PATENT ABSTRACTS OF JAPAN vol. 1995, no. 06, 31 July 1995 (1995-07-31) -& JP 07 057746 A (FUJIKURA LTD), 3 March 1995 (1995-03-03)
- PATENT ABSTRACTS OF JAPAN vol. 017, no. 383 (E-1400), 19 July 1993 (1993-07-19) -& JP 05 067473 A (MITSUI ENG & SHIPBUILD CO LTD), 19 March 1993 (1993-03-19)
- DATABASE WPI Section Ch, Week 199514 Derwent Publications Ltd., London, GB; Class L03, AN 1995-103025 XP002170105 -& JP 07 029575 A (MITSUBISHI JUKOGYO KK), 31 January 1995 (1995-01-31)

## Description

The present invention relates to a method for producing an anode electrolyte assembly for an electrochemical cell, comprising an anode cermet, an electrolyte and an auxiliary layer applied between said cermet and said electrolyte, said anode comprising an oxide that conducts oxygen ions wherein said auxiliary layer contains oxygen ion-conducting oxides and an anode electrolyte assembly obtainable with such method.

Such a method is known from US 5,753,385. An anode interface layer is provided by PVD or CVD techniques,

From the Japanese patent specification 9/190824 an electrochemical cell is known comprising an anode cermet and an auxiliary layer applied thereon on the electrolyte side, said anode comprising a semi-noble metal and an oxide that conducts oxygen ions. With this known assembly the auxiliary layer adjacent to the electrolyte contains 5 % nickel oxide. In European Patent Application 0 672 306 the anode cermet consists of YSZ (yttrium-stabilised zirconia) and a metal (oxide). In order to improve the yield of the cell it is proposed to apply an auxiliary layer between the anode cermet and the electrolyte.

By this means the oxygen ion conduction and electron conduction are optimised. This is achieved mainly as a result of the characteristic that the auxiliary layer consists of metal particles for electron conduction and electrocatalytic activity and oxides for promoting oxygen ion conduction and mechanical stability.

Nowadays doped ceria is used instead of yttrium-stabilised zirconia as the base material for the cermet, in which, of course, metal (oxide) is present. When operating fuel cells in practice it has been found that conditions can arise which cannot be regarded as normal but which it is virtually impossible to avoid in practice. For instance, it is possible that under extreme operating conditions the anode is exposed to oxidising gases. The metal particles in the anode, which in general are applied in the oxide form in the anode but which reduce to metal particles on sintering or starting up, will reoxidise as a result. This results in a change in volume of the layer concerned, caused by the change in volume from metal particles to metal oxide particles.

Operating conditions of this type arise when a fuel cell is in standby mode. Under these conditions the reducing gas is not present and, as a result of oxidation of the metal particles, which in general comprise a semi-noble metal such as nickel, copper or silver and more particularly nickel, the volume increases as a result of the formation of, for example, nickel oxide. Theoretically such a standby mode will not arise, but it nevertheless occurs with some regularity in practice in the event of malfunction.

Appreciable stresses arise as a result of the increase in volume. Consequently it can arise that the anode cermet makes inadequate contact with the electrolyte, as a result of which a dramatic reduction in the yield of the fuel cell occurs.

The aim of the present invention is to improve the mechanical adhesion of the anode layer/electrolyte layer under such conditions, that is to say even in the situation in which oxidation, that is to say an increase in the volume of the anode cermet, takes place it must always be ensured that there is still adequate contact between the anode and the electrolyte during the subsequent operation, where the oxides are reduced again.

This aim is achieved With a method having the features according to claim 1.

It has been, found that a strong mechanical joint between the electrolyte layer and the anode layer is obtained by the use of an auxiliary layer that essentially consists completely of oxygen ion-conducting oxide. By not applying any nickel oxide or other metal oxide in the auxiliary layer, it can be guaranteed that an essentially defect-free auxiliary layer is produced. As a result the strength of the auxiliary layer can be optimised and there is no longer a risk of the anode assembly detaching from the electrolyte during heating or sintering.

A defect-free auxiliary layer can be obtained by adding sinter-active substances to the auxiliary layer in a concentration of up to 5 % (mol/mol). Moreover, the auxiliary layer is sinter-active towards the adjacent layers as a result. After sintering the auxiliary layer, the sinter-active substance present therein will be taken up in the crystal lattice of the oxygen-ion conducting oxide, as a result of which the mechanical properties of the auxiliary layer do not change substantially and the auxiliary layer still consists essentially completely of oxygen ion-conducting oxide.

Examples of sinter-active substances are Co, Ni and Mn. Usually these substances will oxidise easily, but because they are incorporated into the oxygen ion-conducting oxide of the auxiliary layer such oxidation no longer takes place.

The actual anode can be made up in the conventional manner, as is known from the prior art, provided the condition that the oxide particles in the cermet are sinter-active is met, as a result of which a good adhesion with the oxide particles in the auxiliary layer is obtained.

Ceria doped with gadolinium has been mentioned above as an example of the oxygen ion-conducting oxide. More particularly, the oxygen ion-conducting oxides according to the invention are fluonte oxides, such as CeO2, ZrO2, ThQ2, Bi2O3, HfO2 on their own or doped with alkali metal oxides (for example MgO, CaO, SrO, BaO) or rare earth oxides (for example Gd2O3, Sm2O3, Y2O3). In this context oxides exhibiting a fluorite type structure which display a high degree of electrical conduction and mechanical, chemical and theonal stability are preferred.

The auxiliary layer described above has a thickness of between 0.1 and 10 µm Ion conduction is guaranteed by the presence of the doped cerium oxide. This oxide must also be chemically compatible with the oxide present in the anode cermet. Therefore the same cerium oxide is preferably used both for the anode cermet and for the auxiliary layer.

As a result of the presence of an auxiliary layer having a high cerium oxide concentration, the effect of depletion of the cerium oxide from the anode to the electrolyte by diffusion processes at elevated temperature, such as arises during sintering and/or operation of the cell, will be avoided. Consequently, the yield of the anode can be ensured for a prolonged period.

The actual anode can be made up in a conventional manner. According to a preferred embodiment of the invention, the thickness of the anode is between 5 and 100 µm. In contrast to provious proposals, it is desirable that, in view of the mechanical stress to which such an anode cermet is subjected an start-up, cooling and reduction/oxidation, the mechanical strength is appreciable. That is to say it is desirable that the cerium oxide particles form a structure which does not essentially deform on the one hand under high fuel utilisation and on the other hand when a fuel gas is not present Moreover, it is important that the metal (nickel) particles do not sinter together during operation because this causes the strengh of the anode and the electrocatalytic activity of the metal particles to decrease. The aim is for a fine microstructure with a partide size of less than 1 µm. As a result of the use of this relatively small particle size, the metal particles are not able or are barely able to post-sinter during operation after the actual sintering process.

Apart from the particle size, the porosity must also be maintained. This is preferably in the range between 10 and 50 % (V/V).

In order to improve tha contact between the anode and the current collector and, moreover, to counteract the effect of nickel evaporating out of the actual anode, it is proposed according to the invention to apply a contact layer that is essentially metallic, that is to say essentially consists of nickel when nickel is used in the anode. Such a layer is also found to have ductile characteristics, as a result of which the effect of the increase in volume caused by oxidation can be absorbed. Such a metallic anode contact layer preferably has a thickness of between 3 and 10 µm. Differences in thermal expansion between the anode and the current collector are absorbed with such a layer.

Although it is simple to allow such a contact layer to extend over the entire anode/current collector interface, in principle the presence of this layer is necessary only at those locations where current is taken off.

The application of the anode can take place using any method known in the state of the art, such as tape casting. The anode auxiliary layer is obtained by tape casting. According to an advantageous embodiment of the invention, the screen printing technique is used for this purpose. After all, by this means it is possible to obtain the small layer thickness described above. With this procedure the stating material used is preferably a sintered electrolyte based on stabilised zirconia (YSZ). This preferably has a thickness of between 50 and 200 µm. With this procedure, in contrast to the prior of the art, an anode intermediate layer is first applied. In the state as applied, this contains at least 95 % (m/m) cerium oxide doped With gadolinium. After drying at a relatively low temperature (such as 75 °C) this assembly is heated in a furnace at a temperature of at most 950 °C. As a result, the organic material (binder) in the layer applied by screen printing is driven off. The anode intermediate layer is not compacted by this relatively low temperature.

After cooling, the anode cermet is applied to the free side of the anode auxiliary layer. The anode cermet consists of a mixture of, for example, 65 % (m/m) metal oxide and 35 % (m/m) doped cerium oxide. This application can also take place by means of screen printing. Before sintering the various components, a contact layer consisting of a pure metal oxide in which the metal concerned is the same as the metal that is present in the anode cermet is first applied to the free side of the cermet.

A second sintering treatment then follows, in which the microstructure is compacted and rigidity is obtained. Finally, the cathode is then applied on the other side of the electrolyte and the whole is sintered again. The metal oxide described above on the anode side can be reduced to a metal during this final sintering step and will be reduced to a metal when starting up, as a result of the presence of reducing gases.

The invention win be explained in more detail below with reference to an illustrative embodiment shown in the drawing.

In the drawing:

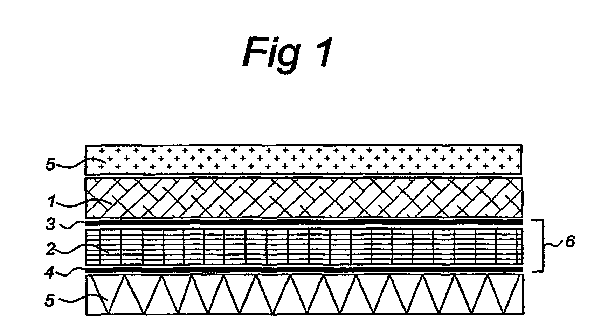

Fig. 1 shows, diamammatically in cross-section, part of an electrochemical cell according to the invention; and
Fig. 2 shows a graph which shows the long-term performance of a cell according to the invention.

An electrolyte consisting of a sintered electrolyte, for example based on stabilised zirconia, is indicated by 1. An anode 6 is applied to this in the manner described above. This anode consists of an anode adhesion layer 3 which forms the join between the electrolyte 1 and the anode cermet 2. This anode adhesion layer promotes the adhesion of the anode cermet to the electrolyte. The anode adhesion layer essentially consists of doped cerium oxide. As a result of the essential absence of metals, should oxidation of metal particles take place, as a result of which an increase in volume in the anode cermet occurs, such a change in volume will not take place in the anode adhesion layer. However, as a result of the presence of the same cerium oxide there is good adhesion between layer 2 and layer 3, which is well able to resist an increase in volume as a result of oxidation of metal particles. On the other hand, the anode adhesion layer adheres particularly well to electrolyte 1.

An anode contact layer 4 which preferably consists of pure metal particles is applied to the anode cermet 2. The current collector is indicated by 5. It must be understood that the anode adhesion layer does not have to extend over the entire surface of the anode cermet 2 but can be applied locally only, in the locations where current take-off by current collector 5 takes place.

The invention will be explained in more detail below with reference to an example.

### Example

The starting material used is a sintered electrolyte comprising yttrium-stabilised zirconia with a thickness of 140 µm.

An intermediate layer with a thickness of 10 µm is applied to this with the aid of a screen printing technique. This intermediate layer is based on cerium oxide doped with gadolinium. In addition, a sinter-active component such as 2 % (mol/mol) cobalt is added to this layer. This assembly is heated at a temperature of 75 °C for two hours in a conventional drying oven. Sintering is then carried out for one hour at 600 °C to drive off the binder.

After cooling, an anode cermet consisting of a mixture of 65 % (m/m) nickel oxide and 35 % (m/m) cerium oxide doped with gadolinium is screen printed. This layer has a thickness of approximately 50 µm. Immediately thereafter a layer with a thickness of 20 µm consisting of pure nickel oxide is screen printed thereon. The various layers are then sintered at a temperature of 1400 °C for one hour.

After cooling, a cathode layer consisting of lanthanum manganite doped with strontium and yttrium-stabilised zirconia is applied to the other side of the electrolyte. The whole is then sintered at 1200 °C.

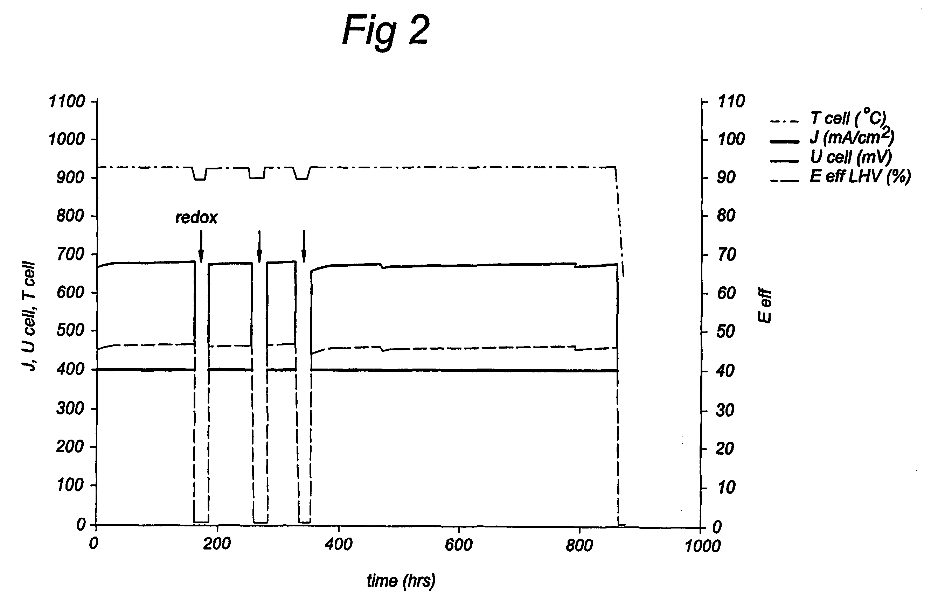

Experiments have shown that a cell that has been produced in the abovementioned manner gives a stable performance for 800 hours, including three oxidation/reduction cycles on the anode side. See Fig. 2 (endurance test graph). In this figure hydrogen (1.9 g/h) was used as fuel and air (155 g/h) as oxidising agent in an endurance test. The effective surface area was 100 cm² in a ceramic housing with Pt current collector for the cathode and an Ni current collector for the anode.

## Claims

1. Method for producing an anode electrolyte assembly (6) for an electrochemical cell, comprising an anode cermet (2), an electrolyte and an auxiliary layer (3) applied between said cermet (2) and said electrolyte (1) side, said anode comprising a semi-noble metal oxide, such as a nickel, copper and silver oxide, and an oxide that conducts oxygen ions, wherein said auxiliary layer contains oxygen ion-conducting oxides, said assembly being electrolyte supported and said auxiliary layer consisting essentially completely of oxygen ion conducting oxides, wherein said auxiliary layer is provided by screen printing or tape casting and has a thickness of between 0.1 and 10 µm.

2. Method according to claim 1, wherein said anode cermet contains Ni.

3. Method according to one of the preceding claims, containing a contact layer containing metal particles applied on the other side of the anode.

4. Method according to claim 3, wherein the metal particles in the anode cermet match the metal particles in the contact layer.

5. Method according to claim 3 or 4, wherein said contact layer has a thickness of between 3 and 10 µm.

6. Method according to one of the preceding claims, wherein said oxygen ion-conducting oxide comprises an oxide of fluorite type structure.

7. Method according to claim 6, wherein said fluorite oxide has been doped with oxides of alkali metals or oxides of rare earths.

8. Method according to one of the preceding claims, wherein said anode cermet comprises an oxygen ion-conducting oxide and wherein said auxiliary layer is chemically compatible with said oxygen ion-conducting oxide.

## Patentansprüche

1. Verfahren zur Herstellung einer Anoden-Elektrolytanordnung (6) für eine elektrochemische Zelle, umfassend eine Cermet-Anode (2), einen Elektrolyten und eine Hilfsschicht (3), welche zwischen das Cermet (2) und die Seite des Elektrolyten (1) eingebracht ist, wobei die Anode ein Oxid eines Halbedelmetalls umfasst, wie beispielsweise Nickel, Kupfer und Silberoxid, und ein Oxid, welches Sauerstoffionen leitet, wobei die Hilfsschicht Sauerstoffionen-leitende Oxide enthält, wobei die Anordnung Elektrolyt-basiert ist und wobei die Hilfsschicht im Wesentlichen vollständig aus Sauerstoffionen-leitenden Oxiden besteht, und wobei die Hilfsschicht mittels Siebdruck oder Tape Casting hergestellt wird und eine Filmdicke zwischen 0,1 und 10 µm aufweist.

2. Verfahren gemäß Anspruch 1, wobei die Cermet-Anode Nickel enthält.

3. Verfahren gemäß einem der vorhergehenden Ansprüche, umfassend eine Kontaktschicht, welche Metallpartikel umfasst und welche auf die andere Seite der Anode aufgebracht ist.

4. Verfahren gemäß Anspruch 3, wobei die Metallpartikel in der Cermet-Anode mit den Metallpartikeln in der Kontaktschicht übereinstimmen.

5. Verfahren gemäß Anspruch 3 oder 4, wobei die Kontaktschicht eine Dicke von zwischen 3 und 10 µm aufweist.

6. Verfahren gemäß einem der vorhergehenden Ansprüche, wobei das Sauerstoffionen-leitende Oxid ein Oxid von Fluorit-artiger Struktur umfasst.

7. Verfahren gemäß Anspruch 6, wobei das Fluorit-Oxid mit Oxiden von Alkalimetallen oder Oxiden von Seltenerdmetallen dotiert ist.

8. Verfahren gemäß einem der vorhergehenden Ansprüche, wobei die Cermet-Anode ein Sauerstoffionen-leitendes Oxid umfasst und wobei die Hilfsschicht chemisch kompatibel ist mit dem Sauerstoffionen-leitenden Oxid.

## Revendications

1. Procédé pour produire un ensemble d'électrolyte anode (6) pour une cellule électrochimique, comprenant un cermet anode (2), un électrolyte et une couche auxiliaire (3) appliquée entre ledit cermet (2) et ledit côté électrolyte (1), ladite anode comprenant un oxyde de métal semi- précieux, tel que de l'oxyde de nickel, de cuivre et d'argent, et un oxyde qui conduit les ions oxygène, dans lequel ladite couche auxiliaire contient des oxydes conduisant les ions oxygène, ledit ensemble étant supporté par électrolyte et ladite couche auxiliaire consistant sensiblement complètement en oxydes conducteurs d'ions oxygène , dans lequel ladite couche auxiliaire est obtenue par sérigraphie ou coulée en ruban et présente une épaisseur entre 0,1 et 10 µm.

2. Procédé selon la revendication 1, dans lequel ledit cermet anode contient du Ni.

3. Procédé selon l'une des revendications précédentes, contenant une couche de contact incorporant des particules de métal appliquées de l'autre côté de l'anode.

4. Procédé selon la revendication 3, dans lequel les particules métalliques dans le cermet anode correspondent aux particules métalliques dans la couche de contact.

5. Procédé selon la revendication 3 ou 4, dans lequel ladite couche de contact a une épaisseur entre 3 et 10 µm.

6. Procédé selon l'une des revendications précédentes, dans lequel ledit oxyde conducteur d'ions oxygène comprend un oxyde de structure de type fluorine.

7. Procédé selon la revendication 6, dans lequel ledit oxyde de fluorine a été dopé avec des oxydes de métaux alcalins ou des oxydes de terres rares.

8. Procédé selon l'une des revendications précédentes, dans lequel ledit cermet anode comprend un oxyde conducteur d'ions oxygène et dans lequel ladite couche auxiliaire est chimiquement compatible avec ledit oxyde conducteur d'ions oxygène.
